# EUROPEAN PATENT SPECIFICATION

(11) **EP 3 557 987 B1**
(45) Date of publication and mention of the grant of the patent: **31.03.2021**
(21) Application number: 17842337.2
(22) Date of filing: 21.12.2017
(51) Int. Cl.: A01M 1/20, A61L 9/03, A01K 51/00

(54) **TEMPERATURE-REGULATED ELECTRIC DEVICE FOR VAPORIZING OXALIC ACID USED IN APICULTURE**
TEMPERATURGEREGELTE ELEKTRISCHE VORRICHTUNG ZUM VERDAMPFEN VON OXALSÄURE IN DER BIENENZUCHT
DISPOSITIF ÉLECTRIQUE À TEMPÉRATURE RÉGULÉE DESTINÉ À VAPORISER DE L'ACIDE OXALIQUE UTILISÉ EN APICULTURE

(30) Priority: 23.12.2016 IT 201600130675
(43) Date of publication of application: 30.10.2019
(73) Proprietor: Talitha S.r.l.s., 57025 Piombino (LI) (IT)
(72) Inventor: BENICCHI, Umberto, 57025 Piombino (LI) (IT)
(74) Representative: Garavelli, Paolo
(86) International application number: PCT/IT2017/000289
(87) International publication number: WO 2018/116331

(56) References cited:
- EP-A2- 0 598 612
- DE-U1-202015 001 160
- KR-A- 20080 024 170

## Description

The invention deals with a temperature-regulated electric device for vaporizing dihydrated oxalic acid used in apiculture; it refers to an electric device for vaporizing oxalic acid according to claim 1.

Electric devices for vaporizing oxalic acid are known. They operate depending on the principle that an electric current, supplying a heater, produces heat which is given to the metallic block with recess so that the metallic block with recess heats up and the oxalic acid contained therein evaporates.

Such devices are generally used by small beekeepers (for example up to about 10 families of bees) because they have a small cost, are simple to use and subject only minimally an operator to acid vapours, because the operator can move away from the delivery area.

Another advantage of this type of devices is the feature of administering acid slowly (about 3 minutes, of which one minute and 30 seconds to reach the vaporizing temperature and the remaining minute and 30 seconds for the actual vaporization of the acid) allowing the winter cluster (which is formed in the cold season) to open and therefore making the acid reach also those bees which are inside the winter cluster itself.

In these known devices, the heater (for example a sparking plug for Diesel engines or a suitably made heater) is rigidly fastened to a metallic block with recess on which a a single dose of acid is arranged.

These known devices however are not satisfactory, and have the problem that, when the heater is supplied, the metallic block with recess heats up and can reach temperatures much higher than the boiling temperature of the oxalic acid, putting the same at a risk of chemical dissociation.

The supply interruption is responsibility of the user, who, after a pre-set time, disconnects the device from the power supply and immerses it in water to cool it down. A possible delay in switching off the supply would subject the heater to uselessly high temperatures from which useless and excessive thermal shocks would derive during the water cooling operations.

Another problem is caused by the excessive slowness of the treatment, due to the need of cooling the device in water between a treatment and the following one, since the addition of oxalic acid with an excessively hot heater would generate its almost immediate evaporation with a propagation of splashes and vapors in the immediate neighborhood. The treatment slowness is the prevailing cause, which makes the known heater scarcely feasible for an average beekeeper (for example up to 100 families of bees). A further consequence of the need of cooling down the heater between a treatment and the following one is the waste of energy due to the following heating from the ambient temperature to the evaporation temperature. Such problem is very relevant since the preferred supply source is the common automobile battery.

Another problem is that such devices have their supply cables directly connected to the heating device and, if it is used as battery-type energy source, this latter one will provide energy till it is completely exhausted, providing thereby an early ageing. In fact, it is known that lead batteries quickly deteriorate if subjected to deep discharges.

Another problem is that such devices, when they ground is connected to a supply cable, run the risk of being short-circuited (situation occurring for example in the devices which use a spark plug of a Diesel engine as heater, assuming that they are supplied with a car battery and their cables are wrongly reverses, abutting the device on any metallic part of the car; also when many device are used by simultaneously connecting them to the accumulator in a wrong way, it can occur that the negative pole is connected to the metallic parts of a device, and the positive pole to the metallic parts of the other one. If, when handling, the metallic parts of the two devices come in contact (either directly or by interposing a conductive element, for example the roof of a hive or the structure on which the various hives rest), the accumulator is short circuited with the danger of its explosion and a projection of sulfuric acid with the risk of starting a fire.

Such device according to a part of claim 1 is known by documents WO0195707A1, DE202007001721U1, GR20090100430A.

Other known electric devices for vaporizing oxalic acid, for a professional use, have, in place of the metallic block with recess, a more spacious container and some of them are capable of containing many doses of oxalic acid which evaporates till the oxalic acid itself is consumed. Task of the operator is distributing the correct dose, by administering for a pre-set time (for example 20 seconds) acid to every family of bees. When passing from a family of bees to the following one, acid goes on evaporating being dispersed in the environment and exposing the operator to vapors of the acid itself. The operator will therefore be adequately protected in all his body parts.

These devices, only used by professional beekeepers and with many families of bees, control the acid evaporation temperature but, on the other hand, has the problem of being costly and in some cases also difficult to be used, since the amount of the administered dose depends on the administration time to every family. Further, the quick administration of acid (about 20 seconds) does not allow the winter cluster to be opened and acid only reaches the bees placed at the periphery of the winter cluster itself.

Some more evolved professional devices offer the chance of administering hot air some seconds before the administration of acid, allowing the winter cluster to be opened, but having the disadvantage of being even more costly and of increasing the administration time.

Object of the present invention is solving the above prior art problems, by providing an electric device for vaporizing oxalic acid comprising a heater and a temperature-sensitive element connected to a controlling and regulating device configured for supplying the heater in order to keep the temperature at a pre-established value.

The above and other objects and advantages of the invention, as will appear from the following description, are obtained with an electric device for vaporizing oxalic acid as claimed in claim 1. Preferred emobodiments and non-trivial variations of the present invention are the subject matter of the dependent claims.

It is intended that all enclosed claims are an integral part of the present description.

It will be immediately obvious that numerous variations and modifications (for example related to shape, sizes, arrangements and parts with equivalent functionality) can be made to what is described, without departing from the scope of the invention as appears from the enclosed claims.

The present invention will be better described by some preferred embodiments thereof, provided as a non-limiting example, with reference to the enclosed drawings, in which:

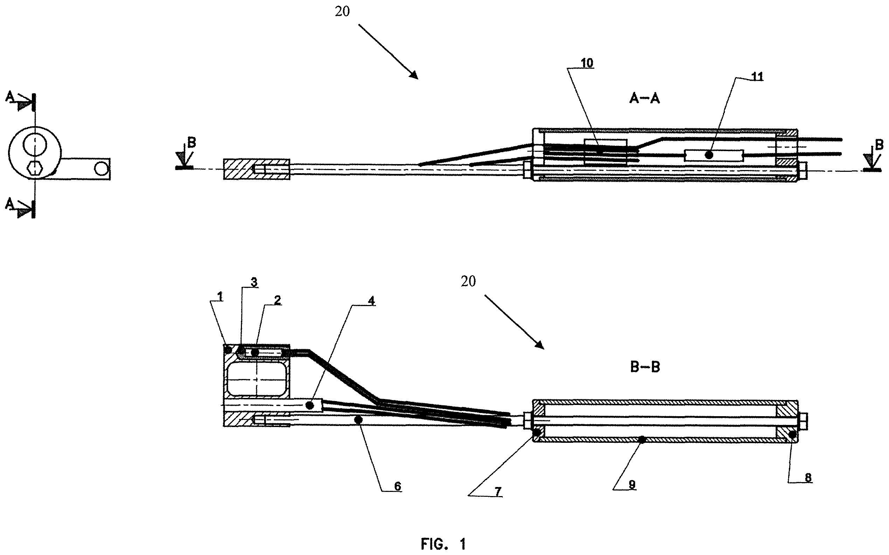

- Figure 1 shows two side sectional views of an electric device for vaporizing oxalic acid according to the present invention; and
- Figure 2 shows a schematic view of an electric circuit of an electric device for vaporizing oxalic acid according to the present invention.

With reference to the Figures, the electric device 20 for vaporizing oxalic acid according to the present invention comprises a container 1, adapted to contain oxalic acid to be heated, a heating element or heater 4 and a temperature-sensitive element 2 connected to the container 1, said heater 4 and temperature-sensitive element 2 being further electrically connected to a controlling and regulating device 10 configured for connecting the heater 4 to a power supply in order to keep the temperature of the container 1 at a pre-established value.

The temperature-sensitive element 2, if a predetermined calibration temperature is reached, through the controlling and regulating device 10, modifies the electric supply of the heater 4.

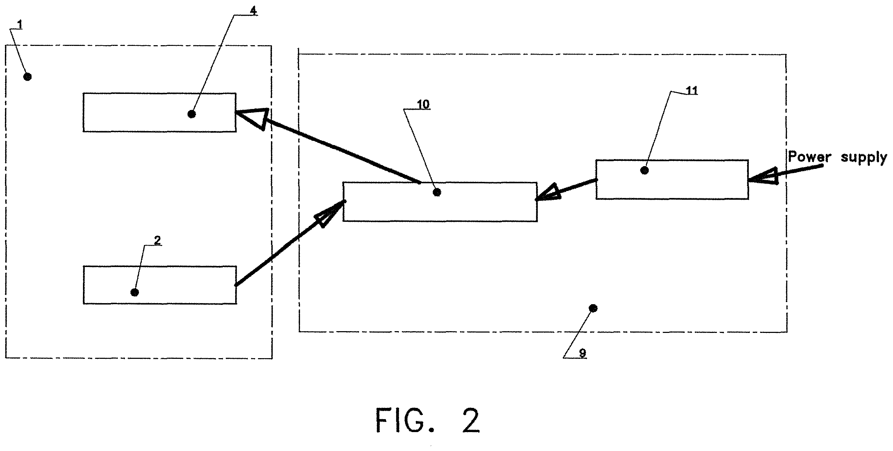

Figure 2 schematically shows the operating principle of the electric diagram. When the temperature is lower than the calibration temperature, the temperature-sensitive element 2 sends the signal to the controlling and regulating device 10 which in turns connects the heater 4 to the supply; the heater 4 by producing heat, heats the metallic block with recess 1. When the temperature is higher than the calibration temperature, the temperature-sensitive element 2 sends the corresponding signal to the controlling and regulating device 10, which consequently switches off the supply to the heater 4.

According to the invention, the temperature-sensitive element 2 is a thermostat, for example of the type with bimetallic foil, and the controlling and regulating device 10 is a relay.

In the description of the thermostat 2, reference will be made to a thermostat 2 with contact which are closed at a lower temperature than the calibration temperature, for example at 200°C, and which open at a higher temperature than the calibration temperature (of 200°C). The operation would be possible even with open contacts at a lower temperature than the calibration temperature and closed at a higher temperature (for example 200°C) inverting the logics of the control circuit. Similarly, reference will be made to a relay 10 with contacts of the normally open (NO) type; the operation would be possible even with normally closed (NC) relay contacts, by inverting the logics of the control circuit.

Upon connecting the electric device 20 to the electric supply, the thermostat 2 behaves as a closed switch and it is possible to make the current supplying the coil of a relay 10 pass through it.

The bimetallic thermostat 2, hypothetically, could also allow the passage of current directly to the resistance of the heater 4, but this is not possible, in practice, since such thermostat has a maximum use current of 5 A while the resistance absorbs 10 A or more. In such latter case, the problem of the early ageing of the battery would not be solves, as will be described below.

Preferably, the relay 10 is of the electromechanical type (with or without resistance/suppressing diode in parallel with the coil in order to reduce the formation of electric arcs next to the contacts of the bimetallic thermostat during the opening step of the contacts).

Forming of electric arcs between the contacts of the bimetallic thermostat 2 is the main cause of the early deterioration of the bimetallic thermostat (from performed tests, the thermostat is capable of opening and closing the contacts about 2000-3000 times before being damaged beyond repair).

Such problem could be solved in the following ways:
a) by using a solid-state relay in place of the electro-mechanical relay, solution which is currently very costly but that, in the future, could become economically advantageous.
b) by interposing a circuit between the bimetallic thermostat 2 and the electro-mechanical relay 10.

Such circuit will be composed of a transistor and of suitable resistances necessary for its correct operation. The transistor is used as switch, which will be closed when it receives voltage on the gate through the bimetallic thermostat connected thereto (for example temperature lower than 200°C) and, under this condition, allows the passage of current through the coil of the relay 10. The transistor will be open when it does not receive voltage on its gate (bimetallic thermostat open since the temperature will be higher than the calibration temperature, for example of 200°C) and, in this case, does not allow the passage of current through the coil of the relay 10.

In this way, the contacts of the bimetallic thermostat 2 will not be subjected to the effects of the electric arcs, since the load supplied by means of the thermostat itself is not of the inductive type (as instead was the coil of the electromechanical relay).

Preferably, in parallel with the coils of the relay 10, a suitable suppressing diode (or re-circulating diode) will be arranged, to prevent excessive voltages from being developed between the source and drain terminals, which can damage the transistor.

The thereby described circuit however has an inconvenience, since the operator will have to pay much attention during the connection operation of the device to the supply source (for example a 12-Volt battery). In fact, the possible wrong connection between positive pole and negative pole can imply a damage of the circuit without repair.

Preferably, in order to avoid the above described inconvenience, the circuit equipped with transistor comprises a rectifier, for example of the Graetz bridge type (namely a diode rectifier with double half-wave), to prevent the transistor terminals from receiving reversed voltages.

The Graetz bridge will have a "small size": in fact, it will be used only for supplying the control circuit (relay coil and transistor), which are the parts for which it is necessary to be certain that the positive pole and the negative pole are connected to the correct terminals. Instead, the current which crosses the resistance of the heater 4 will not cross the Graetz bridge.

In a second embodiment of the electric device 20 for vaporizing oxalic acid according to the present invention, the temperature-sensitive element 2, the controlling and regulating device 10 and the heater 4 are integrated in a self-regulating heater (for example but not according to the invention composed of PTC, Positive Temperature Coefficient, elements).

According to the invention, the container 1 is composed of a metallic block with a seat, for example a recess 1, in which the oxalic acid to be heated is housed; on the metallic block a hole is obtained, in which the temperature-sensitive element 2 is inserted, for example coated with resin 3. On the metallic block with recess a hole is further obtained, in which the heater 4 is inserted. Preferably, a threaded hole is obtained on the metallic block with recess is obtained, on which the connecting rod is screwed, for example through a front closure 7 and a rear closure 8, the container 1 with a handle 9 inside in which the controlling and regulating device 10 is inserted, for example connected to a fuse-holder 11.

In a preferred way, the temperature-sensitive element 2, inserted inside the hole obtained in the metallic block with recess 1, is suitably airtight insulated and resin coated in order to be protected from water seepages during the cooling operation, which can be performed between a treatment and the following one or, alternatively, can be applied externally to the metallic block with recess and in thermal contact therewith or, alternatively, can be an integral part of the heater 4 itself.

Preferably, the heater 4 comprises an electric resistance, for example with a cylindrical shape, and is inserted inside a hole suitable obtained in the metallic block with recess; the heater 4 comprises a connection with the supply cables protected with suitable insulating material, which prevents any water seepage during the cooling operation to be performed between a treatment and the following one.

In a preferred way, the heater 4 comprises an end part from which heat is given off, and a non-heated part comprising the connection with the supply cables, whose purpose is keeping the temperature next to the cable junction and the insulating material low enough in order to protect cables and insulating material from overheating.

In a preferred way, the electric circuit of the device is electrically insulated from the container 1, for example composed of the metallic block with recess, and from the connecting rod 6 to the handle 9 (grounds). This feature allows supplying the device even by reversing the polarities of the supply cables: in fact, this peculiarity increases the operating safety, since the external metallic parts are insulated from the electric parts, reducing the risk of a short circuit (situation which could occur in the devices which, for example, use the spark plug of the Diesel engine as heater, should the device be connected to a car battery by wrongly inverting the cables and resting the device on any metallic part of the car, or when many devices are simultaneously used. In fact, in non-insulated models, by wrongly connecting them to the accumulator, a negative pole could be found connected to the metallic parts of a device and the positive pole could be connected to the metallic parts of the other one. If, when handling, the metallic parts of the two devices get in contact (either directly or by interposing a conducting element, for example a hive roof or the structure on which the various hives rest), the accumulator is short circuited, with a danger of its explosion with projection of sulfuric acid and risk of starting a fire.

Preferably, the container 1, composed of the metallic block with recess, is supported by the rod 6 made of stainless steel (or another metallic material with low heat transmission coefficient) in order to reduce the temperature of the rod 6 next to the handle 9, for example with a cylindrical shape and placed on the rod 6, for example made of stainless steel, on the opposite part of the metallic block with recess 1; for example, the controlling and regulating device 10 and a fuse are placed inside the handle 9.

Preferably, the handle 9 is composed of a cylinder with partial closures at the ends for the passage of electric cables and for the connection to the rod 6, and is connected to the rod 6 through holes eccentrically obtained on the closures of the handle 9 in order to optimize the internal space and allow housing the controlling and regulating device 10 and the fuse without recurring to an excessive size of the handle.

The electric device 20 for vaporizing oxalic acid according to the present invention has the following advantages:
- the temperature-sensitive element 2 placed inside a hole obtained in the metallic block with recess and afterwards encapsulated therein through a suitable heat-conducting resin remains protected during the cooling operations through immersion in water and during the cleaning operations of the device itself;
- the temperature-sensitive element 2 encapsulated in order to prevent the respective electric contacts from getting in electric contact with the metallic block with recess, will remain isolated from ground. A higher electric safety of the device 20 is thereby obtained;
- the heater 4 made waterproof through suitable resin coating in the cable junction area makes its internal part protected during the cooling operations through immersion in water and during the cleaning operations of the device itself;
- the heater 4, placed in a hole obtained in the metallic block with recess 1, is longer than the depth of the hole itself; since in the part going out of the hole, from the connection side with the electric cables, there are no parts developing heat, in such area the temperature progressively decreases till it reaches acceptable values in the spot where the heater 4 is sealed through resin coating, in order not to damage resin and sheath of the cables due to an excessive temperature;
- the circuit part of the heater 4 isolated by its envelope prevents the internal conductors from getting in electric contact with the envelope itself and with the metallic block with recess, keeping the metallic block isolated from the electric circuit. A higher electric safety of the device is thereby obtained;
- the supply of the heater 4 regulated through the controlling and regulating device 10 prevents the metallic block with recess from reaching excessive temperatures, for which there is a risk of dissociation of the oxalic acid; it further offers the chance of speeding up the treatment, by reducing the administration time from 3 minutes to approximately 1 minute and 30 seconds, by inserting acid in an already hot heater without generating the almost immediate evaporation with propagation of splashes and vapors in the immediate neighborhood. A strong energy saving is further obtained, not having to use energy for heating from ambient temperature to evaporation temperature;
- the supply of the heater 4, being regulated through the controlling and regulating device 10, prevents the heater 4 from reaching excessive temperatures, limiting the thermal shocks and increasing the average life of the heater 4, and it allows obtaining energy savings;
- the external metallic parts of the device 20, being isolated from electric conductors, prevent current from flowing from the contacts towards the device ground, preventing the short-circuit condition if the device 20 is rested on a ground connected to a pole of the generator or when many devices are simultaneously used. In fact, the non-isolated devices, if wrongly connected to the accumulator, have their negative pole connected to the metallic parts of a device and their positive pole connected to the metallic parts of the other one. If, during handling, the metallic parts of the two devices get in contact (either directly or by interposing a conducting element, for example a hive roof or the structure on which the various hives rest), the accumulator is short-circuited with a danger of its explosion with projection of sulfuric acid and the risk of starting a fire;

- the connecting rod 6 between device and handle 9, being made of a material with low heat transmission coefficient, allows obtaining a strong temperature decrease in the contact area with the handle 9, safeguarding the handle 9 from damages caused by excessive temperatures;
- since the connecting rod 6 between device and handle 9 is made of a material with low heat transmission coefficient, there is a strong temperature decrease upon going away from the metallic block with recess, contributing to an energy saving;
- since the handle 9 is placed at the opposite end of the metallic block with recess, and connected to the connecting rod 6 through partial closures with hole for passing the rod 6 placed in an eccentric position, a space enough for containing the circuitry is created inside the handle 9, avoiding to use a suitable container with the unavoidable increase of costs;
- the use of the relay (regulating circuit) allows safeguarding the battery from deep discharges, preventing it from early ageing. In fact, too discharged a battery will have a strong voltage drop when absorbing energy by the heater. Consequently, too discharged a battery is under the condition of providing the necessary voltage for closing the relay contacts, but after closing the contacts themselves, when starting the absorption by the heater, is not capable of keeping the voltage constant and high enough for the relay coil, and this would generate the immediate re-opening of the contacts of the relay itself. With open contacts, the battery voltage will be re-established at its rated values again closing the relay contacts, which however will be immediately opened like in the previous step. Such intermittent opening and closing steps of the relay will be a warning for the operator that the battery is next to an excessive discharge. Under this condition, the device will not be able to be heated any more, and will prevent the early ageing of the battery. It is known in fact that lead batteries very quickly deteriorate when they reach very low charge levels.

## Claims

1. Electric device (20) for vaporizing oxalic acid comprising a container (1) adapted to contain oxalic acid to be heated, a heater (4) and a temperature-sensitive element (2) connected to the container (1), said heater (4) and temperature-sensitive element (2) being further electrically connected to a controlling and regulating device (10) configured for connecting the heater (4) to a power supply to keep the temperature of the container (1) at a pre-established value, said temperature-sensitive element (2) being configured for modifying the electric supply of the heater (4) through the controlling and regulating device (10) when a pre-set temperature is reached, wherein the temperature-sensitive element (2) is a thermostat, and the controlling and regulating device (10) is a relay, wherein the container (1) is composed of a metallic block (1) with a seat in which the oxalic acid to be heated is housed, said metallic block (1) comprising a hole in which the temperature-sensitive element (2) is inserted, and comprising a hole in which the heater (4) is inserted.

2. Electric device (20) for vaporizing oxalic acid according to claim 1, **characterized in that** the temperature-sensitive element (2) is a thermostat of a bimetallic foil type.

3. Electric device (20) for vaporizing oxalic acid according to claim 1 or 2, **characterized in that** the controlling and regulating device (10) is a solid state relay.

4. Electric device (20) for vaporizing oxalic acid according to any one of claims 1 to 3, **characterized in that** it comprises a circuit interposed between the thermostat (2) and the relay (10), said circuit comprising a transistor used as switch.

5. Electric device (20) for vaporizing oxalic acid according to claim 4, **characterized in that** said circuit comprises a rectifying bridge.

6. Electric device (20) for vaporizing oxalic acid according to claim 1, **characterized in that** the temperature-sensitive element (2), the controlling and regulating device (10) and the heater (4) are integrated in a self-regulating heater.

7. Electric device (20) for vaporizing oxalic acid according to claim 1, **characterized in that** the metallic block (1) is connected to a rod (6), in turn connected to a handle (9) inside which the controlling and regulating device (10) is inserted.

8. Electric device (20) for vaporizing oxalic acid according to claim 1 or 7, **characterized in that** the temperature-sensitive element (2) inserted inside the hole obtained in the metallic block (1) is isolated and airtight sealed to be protected from water seepages.

9. Electric device (20) for vaporizing oxalic acid according to any one of the previous claims, **characterized in that** the heater (4) comprises a connection with supply cables protected with suitable insulating material to prevent water seepage.

10. Electric device (20) for vaporizing oxalic acid according to any one of the previous claims, **characterized in that** the heater (4) comprises an end part from which heat goes out, and a non-heated part comprising the connection with the supply cables to keep the temperature low next to the cable junction and the insulating material, and protect cables and insulating material from overheating.

11. Electric device (20) for vaporizing oxalic acid according to any one of claims 7 to 10, **characterized in that** the electric circuit of the device is electrically insulated from the container (1) and from the connecting rod (6) to the handle (9) to supply the device even inverting the polarity of the supply cables.

## Patentansprüche

1. Elektrische Vorrichtung (20) zum Verdampfen von Oxalsäure, umfassend einen Behälter (1), der zum Enthalten der zu erhitzenden Oxalsäure geeignet ist, eine Heizung (4) und ein temperaturempfindliches Element (2), die mit dem Behälter (1) verbunden sind; Die Heizung (4) und das temperaturempfindliche Element (2) sind auch elektrisch mit einer Steuer- und Regelvorrichtung (10) verbunden, die konfiguriert ist, um die Heizung (4) mit einer Stromversorgung zu verbinden, um die Temperatur des Behälters (1) auf a zu halten vorbestimmter Wert, wobei das temperaturempfindliche Element (2) konfiguriert ist, um die elektrische Versorgung der Heizung (4) mittels der Steuer- und Regelvorrichtung (10) zu modifizieren, wenn eine vorbestimmte Temperatur erreicht wird, bei der das temperaturempfindliche Element (2) 2) ist ein Thermostat und die Steuer- und Regeleinrichtung (10) ist ein Relais, bei dem der Behälter (1) aus einem Metallblock (1) mit einem Sitz besteht, in dem Um die zu erhitzende Oxalsäure aufzunehmen, umfasst der Metallblock (1) ein Loch, in das das temperaturempfindliche Element (2) eingesetzt ist, und umfasst ein Loch, in das die Heizung eingesetzt ist (4).

2. Elektrische Vorrichtung (20) zum Verdampfen von Oxalsäure nach Anspruch 1, **gekennzeichnet durch** die Tatsache, dass das temperaturempfindliche Element (2) ein Thermostat vom Bimetallfolientyp ist.

3. Elektrische Vorrichtung (20) zum Verdampfen von Oxalsäure nach Anspruch 1 oder 2, **dadurch gekennzeichnet, dass** die Steuer- und Regelvorrichtung (10) ein Halbleiterrelais ist.

4. Elektrische Vorrichtung (20) zum Verdampfen von Oxalsäure nach einem der Ansprüche 1 bis 3, **gekennzeichnet dadurch, dass** sie eine Schaltung umfasst, die zwischen dem Thermostat (2) und dem Relais (10) angeordnet ist, wobei die Schaltung einen verwendeten Transistor umfasst als Schalter.

5. Elektrische Vorrichtung (20) zum Verdampfen von Oxalsäure nach Anspruch 4, **dadurch gekennzeichnet, dass** die Schaltung eine Gleichrichterbrücke umfasst.

6. Elektrische Vorrichtung (20) zur Verdampfung von Oxalsäure nach Anspruch 1, **dadurch gekennzeichnet, dass** das temperaturempfindliche Element (2), die Steuer- und Regelvorrichtung (10) und die Heizung (4) in eine Selbsteinrichtung integriert sind Heizung regulieren.

7. Elektrische Vorrichtung (20) zum Verdampfen von Oxalsäure nach Anspruch 1, **dadurch gekennzeichnet, dass** der Metallblock (1) mit einer Stange (6) verbunden ist, die wiederum mit einem Griff (9) verbunden ist, in dem die Steuerung und Regelvorrichtung (10) eingesetzt ist.

8. Elektrische Vorrichtung (20) zur Verdampfung von Oxalsäure nach Anspruch 1 oder 7, **dadurch gekennzeichnet, dass** das temperaturempfindliche Element (2), das in das im Metallblock (1) hergestellte Loch eingesetzt ist, isoliert und wasserdicht verschlossen ist geschützt vor Wasserinfiltrationen.

9. Elektrische Vorrichtung (20) zum Verdampfen von Oxalsäure nach einem der vorhergehenden Ansprüche, **dadurch gekennzeichnet, dass** die Heizung (4) eine Verbindung mit Stromkabeln aufweist, die mit geeignetem Isoliermaterial geschützt sind, um das Eindringen von Wasser zu verhindern.

10. Elektrische Vorrichtung (20) zum Verdampfen von Oxalsäure nach einem der vorhergehenden Ansprüche, **gekennzeichnet dadurch, dass** die Heizung (4) einen Anschlussteil umfasst, von dem Wärme abgegeben wird, und einen unbeheizten Teil, der die Verbindung mit den zu haltenden Kabeln umfasst die Temperatur nahe der Verbindungsstelle der Kabel und des Isoliermaterials niedrig und zum Schutz der Kabel und des Isoliermaterials vor Überhitzung.

11. Elektrische Vorrichtung (20) zum Verdampfen von Oxalsäure nach einem der Ansprüche 7 bis 10, **dadurch gekennzeichnet, dass** der Stromkreis der Vorrichtung vom Behälter (1) und der Pleuelstange (6) mit dem Griff (9) elektrisch isoliert ist. um das Gerät auch durch Umkehren der Polarität der Stromkabel mit Strom zu versorgen.

## Revendications

1. Dispositif électrique (20) de vaporisation d'acide oxalique comprenant un récipient (1) apte à contenir de l'acide oxalique à chauffer, un élément chauffant (4) et un élément thermosensible (2) relié au récipient (1), ledit élément chauffant (4) et l'élément sensible à la température (2) étant également connectés électriquement à un dispositif de commande et de régulation (10) configuré pour connecter l'élément chauffant (4) à une alimentation électrique pour maintenir la température du récipient (1) à un valeur prédéterminée, ledit élément sensible à la température (2) étant configuré pour modifier l'alimentation électrique de l'élément chauffant (4) au moyen du dispositif de commande et de régulation (10) lorsqu'une température prédéterminée est atteinte, dans lequel l'élément sensible à la température (2) est un thermostat, et le dispositif de commande et de régulation (10) est un relais, dans lequel le conteneur (1) est composé d'un bloc métallique (1) avec un siège dans lequel pour être logé l'acide oxalique à chauffer, ledit bloc métallique (1) comprenant un trou dans lequel est inséré l'élément thermosensible (2), et comprenant un trou dans lequel est inséré l'élément chauffant (4).

2. Dispositif électrique (20) de vaporisation d'acide oxalique selon la revendication 1, **caractérisé par le fait que** l'élément thermosensible (2) est un thermostat du type feuille bimétallique.

3. Dispositif électrique (20) pour la vaporisation de l'acide oxalique selon la revendication 1 ou 2, **caractérisé en ce que** le dispositif de commande et de régulation (10) est un relais à semi-conducteurs.

4. Dispositif électrique (20) de vaporisation d'acide oxalique selon l'une quelconque des revendications 1 à 3, **caractérisé en ce qu'**il comprend un circuit interposé entre le thermostat (2) et le relais (10), ledit circuit comprenant un transistor utilisé comme interrupteur.

5. Dispositif électrique (20) de vaporisation d'acide oxalique selon la revendication 4, **caractérisé en ce que** ledit circuit comprend un pont redresseur.

6. Dispositif électrique (20) pour la vaporisation de l'acide oxalique selon la revendication 1, **caractérisé en ce que** l'élément thermosensible (2), le dispositif de commande et de régulation (10) et le réchauffeur (4) sont intégrés dans une auto-chauffage de régulation.

7. Dispositif électrique (20) de vaporisation d'acide oxalique selon la revendication 1, **caractérisé en ce que** le bloc métallique (1) est relié à une tige (6) à son tour reliée à une poignée (9) à l'intérieur de laquelle la commande et le dispositif de régulation (10) est inséré.

8. Dispositif électrique (20) de vaporisation d'acide oxalique selon la revendication 1 ou 7, **caractérisé en ce que** l'élément thermosensible (2) inséré à l'intérieur du trou pratiqué dans le bloc métallique (1) est isolé et fermé de manière étanche pour être protégé des infiltrations d'eau.

9. Dispositif électrique (20) pour la vaporisation de l'acide oxalique selon l'une quelconque des revendications précédentes, **caractérisé en ce que** le réchauffeur (4) comprend une connexion avec des câbles d'alimentation protégés par un matériau isolant approprié pour empêcher l'infiltration d'eau.

10. Dispositif électrique (20) pour la vaporisation d'acide oxalique selon l'une quelconque des revendications précédentes, **caractérisé en ce que** l'élément chauffant (4) comprend une partie terminale à partir de laquelle la chaleur est libérée, et une partie non chauffée comprenant la connexion avec les câbles à maintenir la température à proximité de la jonction des câbles et du matériau isolant est basse et pour protéger les câbles et le matériau isolant de la surchauffe.

11. Dispositif électrique (20) de vaporisation d'acide oxalique selon l'une quelconque des revendications 7 à 10, **caractérisé en ce que** le circuit électrique du dispositif est isolé électriquement du récipient (1) et de la bielle (6) avec la poignée (9) pour alimenter l'appareil même en inversant la polarité des câbles d'alimentation.
